# EUROPEAN PATENT SPECIFICATION

(11) **EP 4 557 032 B1**
(45) Date of publication and mention of the grant of the patent: **25.11.2026**
(21) Application number: 24207726.1
(22) Date of filing: 21.10.2024
(51) Int. Cl.: G05B 19/418

(54) **INFORMATION PROVIDING SYSTEM, INFORMATION PROVIDING METHOD, AND INFORMATION PROVIDING PROGRAM**
INFORMATIONSBEREITSTELLUNGSSYSTEM, INFORMATIONSBEREITSTELLUNGSVERFAHREN UND INFORMATIONSBEREITSTELLUNGSPROGRAMM
SYSTÈME DE FOURNITURE D'INFORMATIONS, PROCÉDÉ DE FOURNITURE D'INFORMATIONS ET PROGRAMME DE FOURNITURE D'INFORMATIONS

(30) Priority: 24.10.2023 JP 2023182739
(43) Date of publication of application: 21.05.2025
(73) Proprietor: Yokogawa Electric Corporation, Tokyo 180-8750 (JP)
(72) Inventor: WAKE, Ichiro, Musashino-shi, Tokyo 180-8750, (JP); TABUCHI, Masaaki, Musashino-shi, Tokyo 180-8750, (JP)
(74) Representative: Winter, Brandl - Partnerschaft mbB

(56) References cited:
- US-A1- 2018 316 988
- US-A1- 2020 103 946
- MARALI MOUNESH ET AL: "Graceful Reincarnation of Legacy Industrial Control Systems", 2018 IEEE 3RD INTERNATIONAL CONFERENCE ON COMPUTING, COMMUNICATION AND SECURITY (ICCCS), IEEE, 25 October 2018 (2018-10-25), pages 224 - 229, XP033482933, DOI: 10.1109/CCCS.2018.8586804

## Description

### BACKGROUND OF THE INVENTION

### 1. Field of the Invention

The present invention relates to an information providing system, an information providing method, and an information providing program.

### 2. Description of the Related Art

By implementing an automation system in a plant, processes for manufacturing various kinds of products are automated. For example, JP-A-2022-46438 discloses a technique relating to an automation system.

Moreover, US 2018 / 0316988 A1 discloses a battery management device for managing a plurality of field devices of a battery-driven type, the plurality of field devices being associated with a facility disposed in a plant.

Marali Mounesh et al. disclosed "Graceful Reincarnation of Legacy Industrial Control Systems" at 2018 IEEE 3rd International Conference On Computing, Communication and Security (ICCCS), held on October 25, 2018, in which a stepwise migration of control systems is disclosed in which, firstly, old operator consoles are replaced by new and modern DCS HMI transfer of existing control panels but still existing legacy controllers in action, secondly, controllers from legacy control system are replaced and, thirdly, legacy IO's bypassing legacy controllers are replaced.

US 2020 / 103946 A1 discloses that a set of discrete input/output channels for field devices is grouped, organized and connected to a field module device using autosensing and binding techniques.

When migrating the existing automation system (hereinafter, referred to as "existing system") to a new automation system (hereinafter, referred to as "new system"), it is expected to perform the system migration using a method called "hot cutover" whenever possible.

Hot cutover is a method in which a wiring to field devices is switched from an I/O (input/output) of the existing system to an I/O of the new system in a control loop unit, without stopping plant operations, and functional blocks connected to the I/O are also migrated from the existing system to the new system at the same time.

However, there have been cases of being impossible to efficiently carry out the migration from the existing system to the new system.

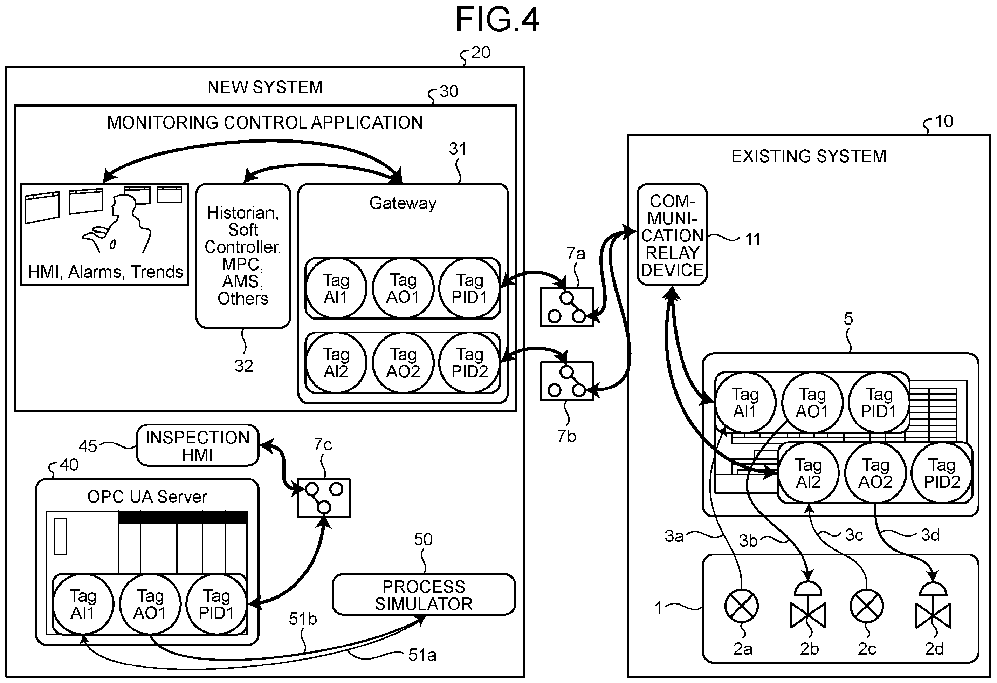

For example, assuming the system configuration illustrated in FIG. 4, until all of I/O and functional blocks of the existing system are switched to the I/O and functional blocks of the new system, plant operation is continued in a state in which the I/O and functional blocks of the existing system and the new system are mixed. When assignment of tags used in an HMI (human machine Interface) used for plant operations is to be changed from the existing system to the new system, it is necessary to complete the assignment in a short period of time. If it takes too long for this process, the control loops to be migrated cannot be restarted in a timely manner, and the possibility of leading to a situation in which suspension of the plant becomes unavoidable increases.

Furthermore, in the case of a hot cutover in which HMIs of both the existing system and new system are in operation unlike in the case illustrated in FIG. 4, a team of workers, including operation monitoring operators of the plant, reviews related diagrams for tags involved in the hot cutover before each operation. In this process, risk assessments for events anticipated to occur during the hot cutover, and changes to the operating method of the plant and complicated procedures to address these events are confirmed using screen copies of both the old and new HMIs. However, during the system migration period, tags that can be monitored change each time between the old and new HMIs, and it is necessary to operate the old and new HMIs to address the events. This increases the likelihood of human error, leading to plant shutdown and the like.

In one aspect, it is an object to provide an information providing system, an information providing method, and an information providing program that are capable of supporting efficient migration from an existing system to a new system. The invention is set out in the appended set of claims.

### SUMMARY OF THE INVENTION

According to an aspect of an embodiment an information providing system comprises a control device configured to provide an operating screen to access to a tag set to a component of a controller that controls a device of a plant; and a managing device configured to manage information of the tag, wherein the managing device includes an acquiring unit configured to receive first tag information regarding a first tag set to a first component of a first controller from a first system, and configured to receive second tag information regarding a second tag set to a second component of a second controller from a second system, wherein the first tag information includes first communication quality regarding the first tag and the second tag information includes second communication quality regarding the second tag; and a change notification unit configured to detect whether an effective tag has changed from the first tag to the second tag based on the first communication quality and the second communication quality, and configured to notify the control device of a detection result, and the control device includes a setting change unit configured to change an access destination to the effective tag to the second controller based on the detection result.

According to another aspect of an embodiment, an information providing method for an information providing system that includes a control device providing an operating screen to access to a tag set to a component of a controller that controls a device of a plant, and a managing device that manages information of the tag, the method includes receiving first tag information regarding a first tag set to a first component of a first controller from a first system by the managing device acquiring second tag information regarding a second tag set to a second component of a second controller from a second system by a managing device; wherein the first tag information includes first communication quality regarding the first tag and the second tag information includes second communication quality regarding the second tag; detecting whether an effective tag has changed from the first tag to the second tag based on the first communication quality and the second communication quality, and notifying the control device of a detection result by the managing device; and changing an access destination to the effective tag to the second controller based on the detection result by the control device.

According to still another aspect of an embodiment, an information providing program that causes a computer to execute the above information providing method is provided.

According to an embodiment, it is possible to support efficient migration from an existing system to a new system.

### BRIEF DESCRIPTION OF THE DRAWINGS

FIG. 1 is a diagram Part 1 for explaining an example of a process of migrating from an existing system to a new system:
FIG. 2 is a diagram Part 2 for explaining an example of the process of migrating from the existing system to the new system;
FIG. 3 is a diagram Part 3 for explaining an example of the process of migrating from the existing system to the new system;
FIG. 4 is a diagram Part 4 for explaining an example of the process of migrating from the existing system to the new system;
FIG. 5 is a diagram Part 5 for explaining an example of the process of migrating from the existing system to the new system;
FIG. 6 is a diagram Part 6 for explaining an example of the process of migrating from the existing system to the new system;
FIG. 7 is a diagram illustrating an example of a tag information table;
FIG. 8 is a diagram illustrating an example of the tag information table after update;
FIG. 9 is a diagram illustrating an example of a structure of a tag held by a monitoring control application;
FIG. 10 is a diagram illustrating an example of a progress status screen;
FIG. 11 is a functional block diagram illustrating a functional configuration of a tag-information providing server according to the present embodiment;
FIG. 12 is a diagram illustrating an example of an information managing table;
FIG. 13 is a functional block diagram illustrating a functional configuration of a control device according to the present embodiment;
FIG. 14 is a flowchart illustrating a flow of processing of the tag-information providing server according to the present embodiment; and
FIG. 15 is a diagram explaining a hardware configuration example.

### DETAILED DESCRIPTION OF THE PREFERRED EMBODIMENTS

Hereinafter, embodiments of an information providing system, an information providing method, and an information providing program disclosed in the present application will be explained in detail with reference to the drawings. The embodiments are not intended to limit this invention. Moreover, identical reference signs are assigned to identical components, and duplicated explanation will be omitted. The respective embodiments can be combined within a range not causing contradiction.

### Embodiment

### About Migration from Existing System to New system

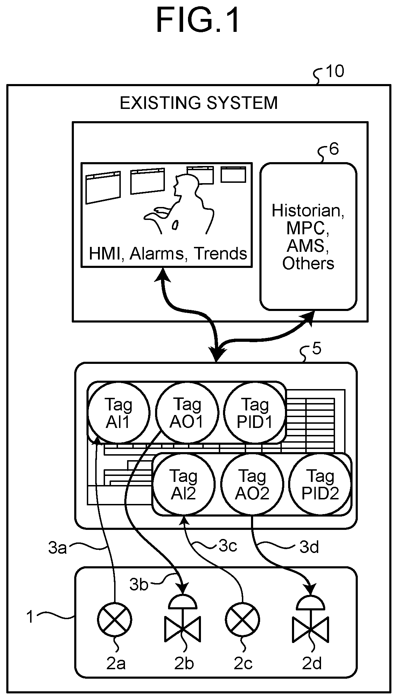

An example of a process of migrating an automation system of a plant from an existing system to a new system will be explained. FIGS. 1 to 6 are diagrams explaining an example of the process of migrating from the existing system to the new system.

First, FIG. 1 will be explained. An existing system 10 illustrated in FIG. 1 is an automation system before a new system is installed. For example, the existing system 10 includes a plant 1 and a controller 5.

The plant 1 is a production facility for petroleum and petrochemicals, gas, iron and non-ferrous metals, chemicals, power, food and pharmaceuticals, or the like.

Multiple devices are installed in various locations in the plant 1. In the example illustrated in FIG. 1, devices 2a, 2b, 2c, and 2d are installed. For example, the devices 2a, 2c are transmitters. The device 2b, 2d are valves. In the plant 1, other devices may be installed. Other devices include a pressure sensor, a temperature sensor, a flow sensor, a pH sensor, a speed sensor, an acceleration sensor, a pump, a motor, and the like.

The controller 5 is a hardware or software component that maintains process variables of the plant 1, such as flow, pressure, level, and temperature, within the set ranges. The controller 5 includes an I/O and a functional block.

The I/O is an information-processing hardware component that receives a control output from the controller 5 to transmit to a device in the plant 1, and receives a process value from a device in the plant 1 to transmit to the controller 5.

The functional block performs a control of calculating and adjusting a control signal (proportional integral derivation (PID) control) based on a difference (error) between a current state of a subject to be controlled and a target state. The functional block is connected to a devices in the plant 1 through the I/O, and forms a control loop.

To the I/O and the functional block of the controller 5, tags are set. For example, "Tag AI1", "Tag AO1", "Tag AI2", "Tag AO2" illustrated in FIG. 1 are tags set to the I/O of the controller 5. "Tag PID1", "Tag PID2" are tags set to the functional block of the controller 5.

For example, the I/O to which "Tag AI1" is assigned is connected to the device 2a through a wiring 3a, and receives a process value from the device 2a. The functional block to which "Tag PID1" is assigned generates a control signal based on the process value from the device 2a, and outputs the generated control signal to the I/O to which "Tag AO1" is assigned. The I/O to which "Tag AO1" is assigned is connected to the device 2b through a wiring 3b, and transmits the control signal to the device 2b.

The I/O to which "Tag AI2" is assigned is connected to the device 2c through a wiring 3c, and receives a process value from the device 2c. The functional block to which "Tag PID2" is assigned generates a control signal based on the process value from the device 2c, and outputs the generated control signal to the I/O to which "Tag AO2" is assigned. The I/O to which "Tag AO2" is assigned is connected to the device 2d through a wiring 3d, and transmits the control signal to the device 2d.

At the stage illustrated in FIG. 1, an operator of the existing system 10 operates the HMI of the existing system 10, to communicate with the I/O and the functional block of the controller 5. Moreover, the operator of the existing system 10 checks Alarms and Trends. Alarms is information indicating an abnormality or a problem occurring within the existing system 10. Trends is information visualizing changes in a history of process values within the existing system 10 into a graph or the like.

The existing system 10 includes various kinds of application software 6. For example, the various kinds of application software 6 include historian, Model Predictive Control (MPC), and Asset Management System (AMS).

Historian is a process database that records a history of process variables, alarms, and events.

MPC predicts uses a prediction model of the plant and predicts an output of a future plant.

AMS is an asset management system that monitors and manages the assets of the plant.

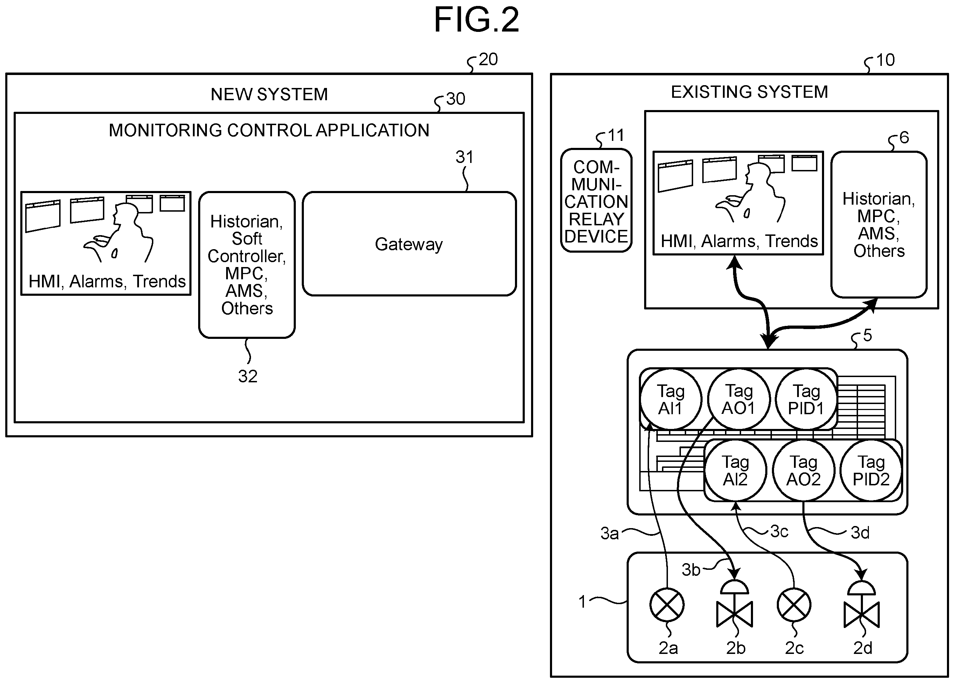

Moving onto explanation of FIG. 2, a communication relay device 11 is added to the existing system 10. The communication relay device 11 is an open platform communications unified architecture(OPC UA) server or the like, and communicates with a gateway 31 of a new system 20. The communication relay device 11 publishes data of the I/O and the functional block of the existing system 10 to a monitoring control application 30 of the new system 20.

In FIG. 2, the new system 20 is added. To the new system 20, the monitoring control application 30 is set. The monitoring control application 30 includes a gateway 31, various kinds of application software 32, and HMI alarms, and Trends. Gateway 31 is OPC UA Client or the like, and communicates with the communication relay device 11 of the existing system 10, and receives data of the I/O and the functional block of the existing system 10. Moreover, Gateway 31 has a function as OPC UA Server that provides data of the existing system to various kinds of the application software 32, and HMI, Alarms, and Trends. Various kinds of the application software 32 include historian, soft controller, MPC, and AMS. Furthermore, the monitoring control application 30 provides HMI, Alarms, and Trends to an operator of the new system 20.

The soft controller is a kind of controller, and is a software component having a function of controlling process variables although I/O is not included therein.

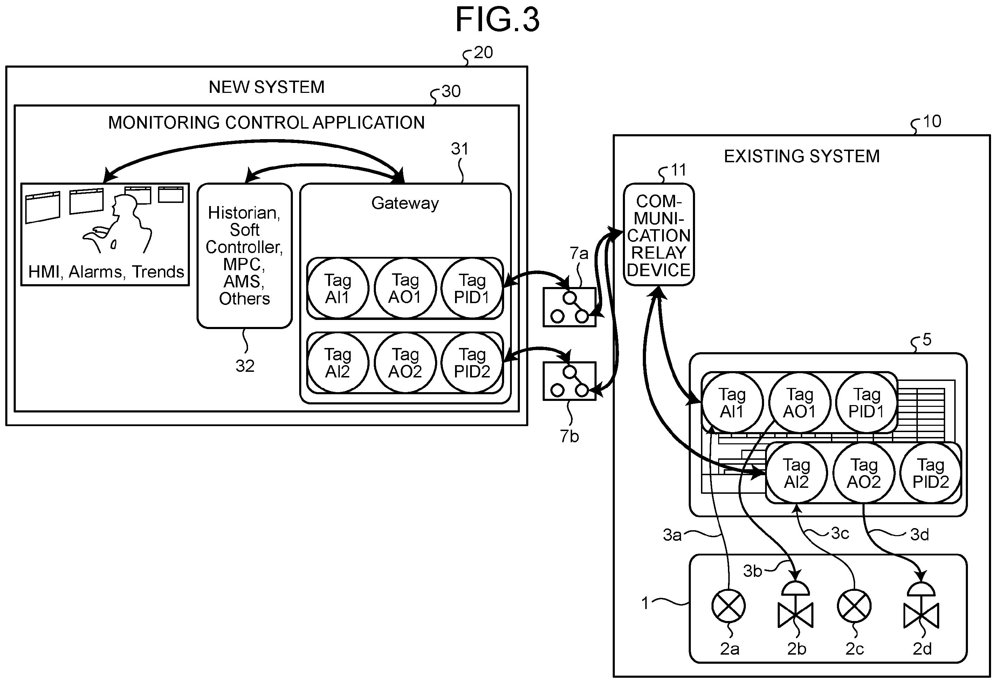

Moving onto explanation of FIG. 3, Gateway 31 of the monitoring control application 30 is connected to the communication relay device 11 through switches 7a, 7b as illustrated in FIG. 3. The switches 7a, 7b virtually indicate connection destinations of Gateway 31. Gateway 31 acquires information of tags set to the controller 5 from the communication relay device 11, and stores the acquired information of tags. For example, Gateway 31 communicates with the communication relay device 11, and acquires a set of "Tag AI1", "Tag AO1", and "Tag PID1", and a set of "Tag AI2", "Tag AO2", and "Tag PID2" set to the I/O and the functional block of the controller 5, to record them.

At a migration state in FIG. 3, by operating HMI of the monitoring control application 30, the operator of the new system 20 can read and write to the I/O and the functional block of the controller 5 of the existing system 10. HMI, Alarms, Trends, and various kinds of the application software 6 of the existing system 10 are transferred to the monitoring control application 30 of the new system 20. Thus, the operator can be proficient in operating the existing system 10 by using the monitoring control application 30 of the new system 20.

Moving on to explanation of FIG. 4, a worker other than the operator of the new system 20 installs a controller 40 in the new system 20. The controller 40 has a function of OPC UA Server. The controller 40 and an inspection HMI 45 are connected to each other through a switch 7c. The switch 7c virtually indicates a connection destination of the controller 40.

The worker inspects a control loop having the same function as the existing system 10 in advance using an identical name to the tag name of the existing system 10. The worker sets tags same as those of the I/O and the functional block of the controller 5 to the I/O and the functional block of the controller 40 by operating the inspection HMI 45, to construct an identical control loop. In the example illustrated in FIG. 4, the worker sets "Tag AI1", "Tag AO1", and "Tag PID1" to the I/O and the functional block of the controller 40, to construct the control loop.

The worker connects the I/O to which "Tag AI1" is assigned of the controller 40 to a process simulator 50 by a wiring 51a. The worker connects the I/O to which "Tag AO1" is assigned of the controller 40 to the process simulator 50 by a wiring 51b. The worker inspects the control loop set to the controller 40 using the process simulator 50.

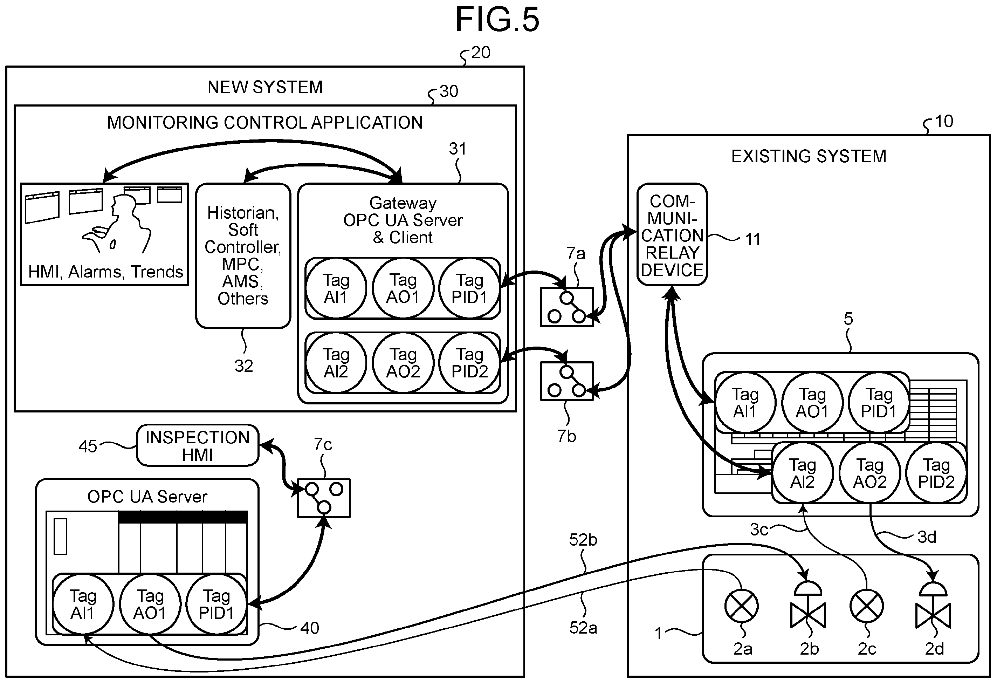

Moving onto explanation of FIG. 5, when there are no abnormalities in results of the inspection of the control loop of the controller 40, the worker applies a physical safeguard, with respect to a device that receives a control signal from the controllers 5, 40, to prevent significant fluctuations in the process values during loop migration. For example, the worker fixes the position of the device 2b (valve) of the plant 1.

After applying the safeguard with respect to the device, the worker changes wirings of the device. For example, the worker removes the wirings between the controller 5 and the devices 2a, 2b. The worker connects the I/O to which "Tag AI1" is assigned of the controller 40 to the device 2a by a wiring 52a. The worker connects the I/O to which "Tag AO1" is assigned of the controller 40 to the device 2b by a wiring 52b.

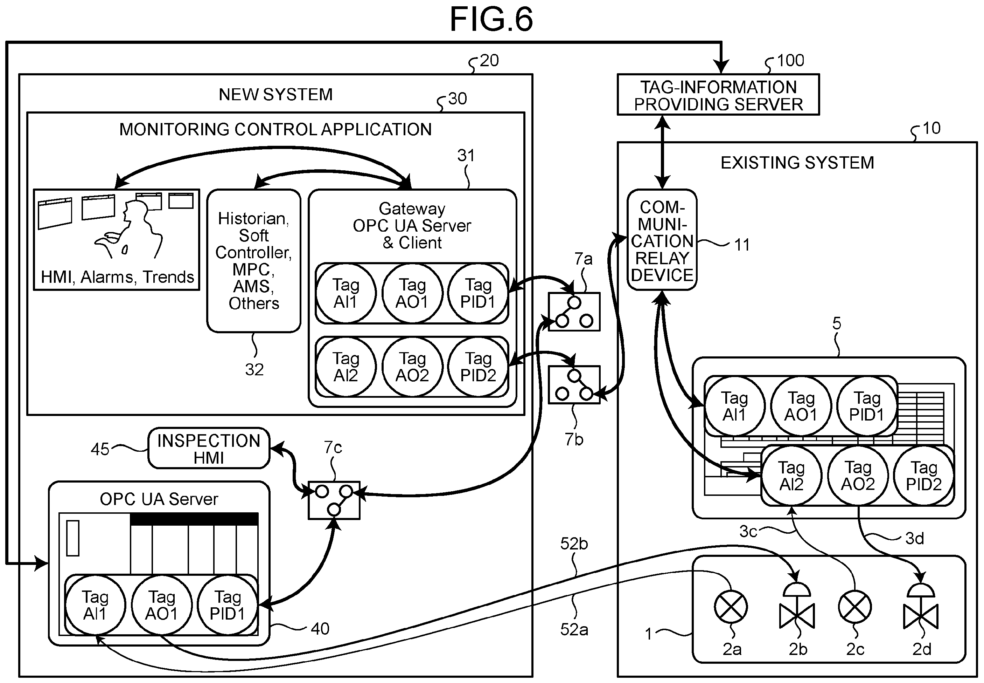

Moving onto explanation of FIG. 6, the system includes a tag-information providing server 100 although illustration thereof is omitted in FIG. 1 to FIG. 5 described above. In the following explanation, the existing system 10, the new system 20, and the tag-information providing server 100 are denoted collectively as "information providing system".

In the process of migrating from the existing system 10 to the new system 20, the tag-information providing server 100 is in constant communication with the communication relay device 11 and the controller 40, and upon detecting a change in the wiring, it switches the OPC UA server used for communication with a tag of the controller from the existing system 10 to the new system 20.

The worker removes the physical safeguard applied in FIG. 5. For example, the worker releases the fixed position of the device 2b (valve) of the plant 1. The controller 40 of the new system 20 starts the control loop relating to the I/O to which "Tag AI1" is assigned, the I/O to which "Tag AO1" is assigned, and the functional block to which "Tag PID1" is assigned.

For example, when migration from FIG. 1 to FIG. 6 is completed, HMI of the new system 20 communicates with the new system for the respective tags of "Tag AI1", "Tag AO1", and "Tag PID1", and communicates with the existing system 10 for the respective tags of "Tag AI2", "Tag AO2", and "Tag PID2".

The tag-information providing server 100 changes communication destinations each time a remaining wiring is reconnected by the worker also for a remaining control loop similarly.

As described above, in plant operation in a period in which the existing system 10 and the new system 20 both exist as described above, it is possible to provide consistency in operation monitoring of a plant, and to change tag names on an operating screen automatically and in a short period of time. Therefore, it is possible to improve operation efficiency in system migration, to prevent operational mistakes, and to reduce a risk of plant shutdown. For example, according to the information providing system, it is possible to support efficient migration from the existing system 10 to the new system 20.

### About Functions of Information Providing System

The information providing system has a tag-information providing function, a change notification function, a configuration change function, and a system-migration-state monitoring function to monitor operation of a plant in a period in which the existing system 10 and the new system 20 both exist. In the following, the tag-information providing function, the change notification function, a setting change function, the configuration change function, and the system-migration-state monitoring function of the information providing system will be sequentially explained.

For example, in the information providing system illustrated in FIG. 6, the existing system 10 is one example of "first system". The controller 5 is one example of "first controller". The component (the I/O, the functional block) of the controller 5 is one example of "first component". A tag set to the component (the I/O, the functional block) of the controller 5 is one example of "first tag". Information regarding the tag set to the component (the I/O, the functional block) of the controller 5 is one example of "first tag information".

In the information providing system illustrated in FIG. 6, the new system 20 is one example of "second system". The controller 40 is one example of "second controller". The component (the I/O, the functional block) of the controller 40 is one example of "second component". A tag set to the component (the I/O, the functional block) of the controller 40 is one example of "second tag". Information regarding the tag set to the component (the I/O, the functional block) of the controller 40 is one example of "second tag information".

### About Tag Information Providing Function

The tag-information providing function will be explained. For example, the tag-information providing function is a function of providing tag information of the I/O and the functional block to the monitoring control application 30. For example, the tag-information providing function is a function of the tag-information providing server 100.

For example, the tag-information providing server 100 has a role of a Global Discovery Server and Alias Name Server, constructed in compliance with OPC UA Part 12: Discovery and Global Services, and Part 17: Alias Names.

The tag-information providing server 100 communicates with the communication relay device 11 of the existing system 10 and the controller 40 of the new system 20, and registers the tag name of the I/O and the functional block set to the controller 5 of the existing system 10 and the controller 40 of the new system 20 in a tag information table as alias names.

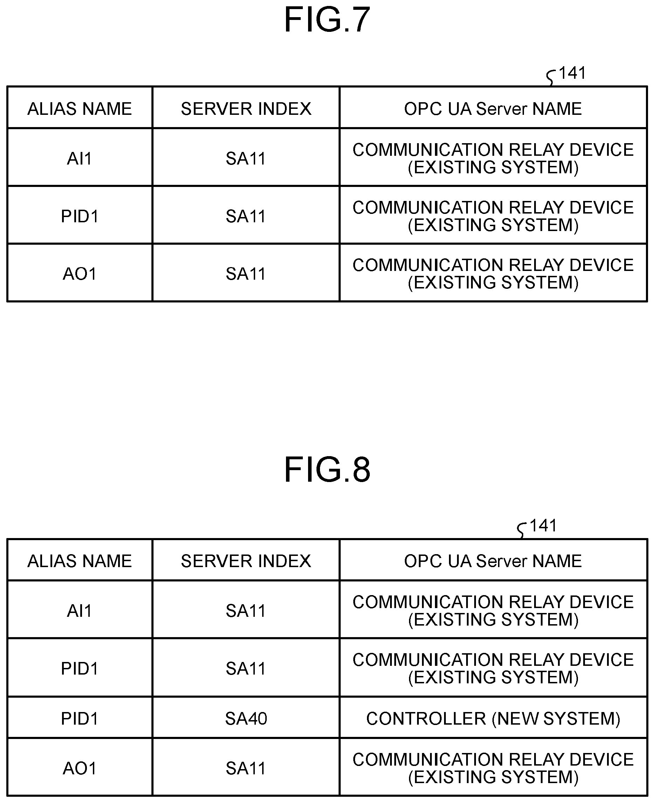

FIG. 7 is a diagram illustrating an example of the tag information table. As illustrated in FIG. 7, a tag information table 141 has alias name, server index, and OPC UA Server name associated with its server. The alias name is a clearly defined alternative name for an arbitrary control node (for example, an I/O, a controller, and the like) within the information providing system, and information is published to the monitoring control application 30. In the present embodiment, the alias name is handled as an alternative name for a tag name, and has information, such as a namespace name and a server index of the OPC UA Server.

The server index is an index to identify OPC UA Server. In the present embodiment, a server index of the communication relay device 11 serving as OPC UA Server in the existing system 10 is referred to as "SA11". A server index of the controller 40 serving as OPC UA Server in the new system 20 is referred to as "SA40".

In the example illustrated in FIG. 7, alias names "AI1", "PID1", and "AO1" are respectively set to the server index "SA11". Moreover, an OPC UA Server name "communication relay device (existing system)" is associated with the server index "SA11". Therefore, it is indicated that at positions of the controller 5 under the communication relay device 11 corresponding to the server index "SA11", the tags "AI1", "PID1", and "AO1" are present.

The tag-information providing server 100 notifies the monitoring control application 30 (for example, OPC UA Client of HMI) using the relevant tag of information of the tag information table 141 illustrated in FIG. 7, and the monitoring control application 30 communicates with OPC UA Server using the tag information table 141.

Suppose that the tag name "PID1" is set to the controller 40 serving as OPC UA Server in the new system 20. The tag-information providing server 100 communicates with the controller 40, and updates the tag information table 141 as illustrated in FIG. 8.

FIG. 8 is a diagram illustrating an example of the tag information table after update. As illustrated in FIG. 8, the alias name "PID1", the server index "SA40", and the OPC UA Server name "controller (new system)" are added to the tag information table 141. The tag information table 141 allows different server indexes to be set for the same alias name. For example, in the tag information table 141 in FIG. 8, the tag "PID1" is present in both the controller 5 under the communication relay device 11 and the controller 40.

### About Change Notification Function

Subsequently, the change notification function will be explained. For example, the change notification function is a function of notifying, when a position of a useful tag is changed, the monitoring control application 30 of the change. The change notification function is a function of the tag-information providing server 100.

Upon detecting that one server index has changed to another server index for a specific alias name, the tag-information providing server 100 notifies the monitoring control application 30 of information of the server index after the change, which is the server index for the specific alias. For example, when detecting that the effective server index has changed from "SA11" to "SA40" for the alias name "PID1", the tag-information providing server 100 notifies the monitoring control application 30 that the effective server index for the alias name "PID1" is "SA40".

The tag-information providing server 100 performs detection of a change of the server index as follows. The tag-information providing server 100 is in constant communication with the communication relay device 11 and the controller 40.

The communication relay device 11 transmits information including the alias name of the tag set to the controller 5, the server index of its own, and quality identification data to the tag-information providing server 100. The quality identification data indicates "GOOD" when a tag is connected to a device through a wiring and is accessible. On the other hand, the quality identification data indicates "BAD" when a tag is not connected a device through a wiring, and is not accessible. The quality identification data corresponds to "communication quality".

For example, when the tag "Tag PID1" is set to the functional block of the controller 5, the tag "Tag AI1" is connected to the device 2a through the wiring 3a, and the tag "Tag AO1" is connected to the device 2b through the wiring 3b, the communication relay device 11 transmits information "alias name: PID1@{server index: SA11} quality identification data: GOOD" to the tag-information providing server 100.

On the other hand, when the tag "Tag PID1" is set to the functional block of the controller 5 but the tag "Tag AI1" and the tag "Tag AO1" are not connected to the device 2a, 2b through wirings, the communication relay device 11 transmits information "alias name: PID1@{server index: SA11} quality identification data: BAD" to the tag-information providing server 100.

For example, when the tag "Tag PID1" is set to the functional block of its own, the tag "Tag AI1" is connected to the device 2a through the wiring 52a, and the tag "Tag AO1" is connected to the device 2b through the wiring 52b, the controller 40 transmits information "alias name: PID1[{server index: SA40} quality information data: GOOD" to the tag-information providing server 100.

On the other hand, when the tag "Tag PID1" is set to the functional block of its own, the tag "Tag AI1" and the tag "Tag AO2" are not connected to the devices 2a, 2b through wirings, the controller 40 transmits information "alias name: PID1(@{server index: SA40 quality identification data: BAD" to the tag-information providing server 100.

When receiving the information "alias name: PID1@{server index: SA11} quality identification data: BAD" from the communication relay device 11, and receiving the information "alias name: PID1[{server index: SA40} quality information data: GOOD" from the controller 40, the tag-information providing server 100 detects that the effective server index has changed from "SA11" to "SA40" for the alias name "PID1".

Upon detecting that the effective server index "SA11" has changed to "SA40" for the alias name "PID1", the tag-information providing server 100 multicasts "Model Change Event" in which the detected content is set to a communication network. The monitoring control application 30 is thereby enabled to be aware of the change of the server index.

### About Configuration Change Function

Subsequently, the configuration change function will be explained. For example, the configuration change function perceives that the server index corresponding to the tag has changed, and changes the OPC UA Server name connected to the relevant tag. The configuration change function is a function of the monitoring control application 30.

The monitoring control application 30 has an OPC UA Client function, and communicates with the communication relay device (OPC UA Server) 11, the controller (OPC UA server) 40, and the tag-information providing server 100 through the OPC UA Client function. The OPC UA Client of the monitoring control application 30 supports a function of receiving Model Change Event transmitted from the tag-information providing server 100.

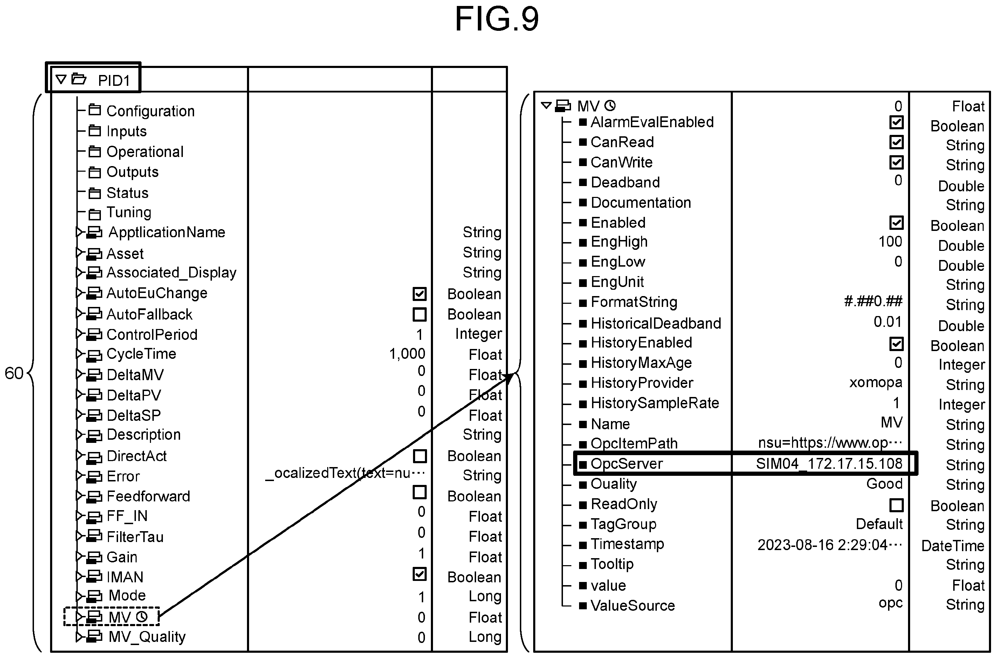

The monitoring control application 30 holds the OPC UA Server name at a communication destination as a parameter. FIG. 9 is a diagram illustrating an example of a structure of a tag held by the monitoring control application 30. The structure of the tag illustrated in FIG. 9 is a data structure regarding a tag with the tag name "PID1". In a substructure 60 under the tag name "PID1," multiple item names are defined. Under each item name, various kinds of parameters are defined. For example, under an item name "MV", various kinds of parameters as indicated on a right side in FIG. 9 are included, and one of the parameters is "OPC Server name (same as the OPC UA Server name)".

For example, when acquiring "Model Change Event" indicating that the effective server index has changed from "SA11" to "SA40" for the alias name "PID1" from the tag-information providing server 100, the monitoring control application 30 updates the OPC UA Server name set to "OPC Server name (same as the OPC UA Server name)" from a name associated with the server index "SA11" to a name associated with "SA40".

Although illustration is omitted, the monitoring control application 30 updates the OPC UA Server names set to "OPC Server name" included under all item names in the substructure 60 under the tag name "PID1" from the name associated with the server index "SA11" to the name associated with "SA40". Thus, the monitoring control application 30 communicates with the controller 40 (the new OPC UA Server) for the changed tag "PID1".

The information regarding each tag is set to the Gateway 31 of the monitoring control application 30.

### About System-Migration-State Monitoring Function

Subsequently, the system-migration-state monitoring function will be explained. For example, the system-migration-state monitoring function provides a screen that displays a progress status system migration as a list. The system-migration-state monitoring function is a function of the tag-information providing server 100. In the following explanation, the screen displaying the progress status of system migration as a list is denoted as "progress status screen".

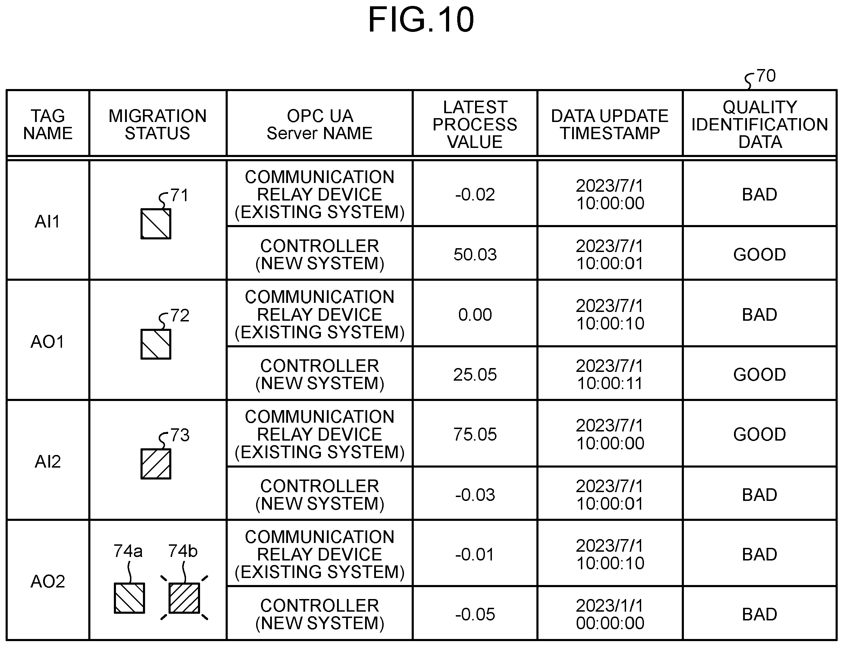

FIG. 10 is a diagram illustrating an example of the progress status screen. As illustrated in FIG. 10, a progress status screen 70 includes TAG NAME, MIGRATION STATUS, OPC UA SERVER NAME, LATEST PROCESS VALUE, DATA UPDATE TIMESTAMP, AND QUALITY IDENTIFICATION DATA.

TAG NAME is a character string assigned to a tag. MIGRATION STATUS represents a status of migration by colors of a marker. OPC UA SERVER NAME is a name of OPC UA Server having a tag corresponding to the tag name thereunder and, for example, is set to the communication relay device 11 of the existing system 10 and the controller 40 of the new system 20. LATEST PROCESS VALUE is a latest process value corresponding to a tag corresponding to the tag name. DATA UPDATE TIMESTAMP is information regarding a time at which relevant data is updated (year, month, date, time, and the like). Explanation about QUALITY IDENTIFICATION DATA is same as the explanation above. In the explanation in FIG. 10, a tag set to the controller 5 of the existing system 10 is denoted as "existing tag", and a tag set to the controller 40 of the new system 20 is denoted as "new tag".

The tag-information providing server 100 determines that normal communication is enabled with the newly established tag when the QUALITY IDENTIFICATION DATA corresponding to the existing tag is "BAD" and QUALITY IDENTIFICATION DATA corresponding to the new tag is "GOOD". The tag-information providing server 100 displays a background color of a square marker indicating the migration status in a first color (for example, green) when normal communication is enabled with the newly established tag, that is, when the migration has been completed for the tag. For example, the tag-information providing server 100 displays the background color of markers 71, 72 in the first color because the migration from the existing system to the new system 20 has been completed for the tag names "AI1", "AO1" on the progress status screen 70.

The tag-information providing server 100 determines that the normal communication is enabled with the existing tag when QUALITY IDENTIFICATION DATA corresponding to the existing tag is "GOOD" and QUALITY IDENTIFICATION DATA corresponding to the new tag is "BAD". The tag-information providing server 100 displays the background color of the square marker indicating the migration status in a second color (for example, yellow) when normal communication is enabled with the existing tag, that is, when the migration has not been started for the tag. For example, the tag-information providing server 100 displays the background color of markers 73 in the second color because the migration from the existing system 10 has not been started for the tag name "AI2" on the progress status screen 70.

The tag-information providing server 100 determines that the normal communication is not enabled with the existing tag and the new tag when QUALITY IDENTIFICATION DATA corresponding to the existing tag is "BAD" and QUALITY IDENTIFICATION DATA corresponding to the new tag is "BAD". The tag-information providing server 100 displays the background color of the square marker indicating the migration status in a third color "for example, orange" when normal communication is not enabled with the existing tag and the new tag, that is, when the migration is in process for the tag. For example, the tag-information providing server 100 displays the background color of a marker 74a in the third color because normal communication is not enabled with the new tag and the existing tag for the tag name "AO2" on the progress status screen 70.

Furthermore, the tag-information providing server 100 displays the background color of the square marker indicating the migration status in a fourth color "for example, red" and a fifth color "for example, black" blinking every 500 milliseconds when a period of time in which QUALITY IDENTIFICATION DATA corresponding to the existing tag is "BAD" and QUALITY IDENTIFICATION DATA corresponding to the new tag is "BAD" lasts for predetermined time (for example, the default value is set to 60 seconds) or longer. For example, the tag-information providing server 100 blinks the background color of the marker 74b in the fourth color and the fifth color when a period of time in which QUALITY IDENTIFICATION DATA corresponding to the existing tag is "BAD" and QUALITY IDENTIFICATION DATA corresponding to the new tag is "BAD" lasts for predetermined time or longer for the tag name "AO2" on the progress status screen 70.

Although the marker 74a and the marker 74b are illustrated separately in FIG. 10 for convenience of explanation, the marker corresponding to the tag name "AO2" of the progress status screen 70 is just one similarly to markers corresponding to other tag names.

By referring to the progress status screen 70 displayed by the system-migration-status monitoring function, the worker can quickly recognize the progress of the work, and can contribute to completing the system migration as scheduled.

### Functional Configuration of Tag-Information Providing Server 100

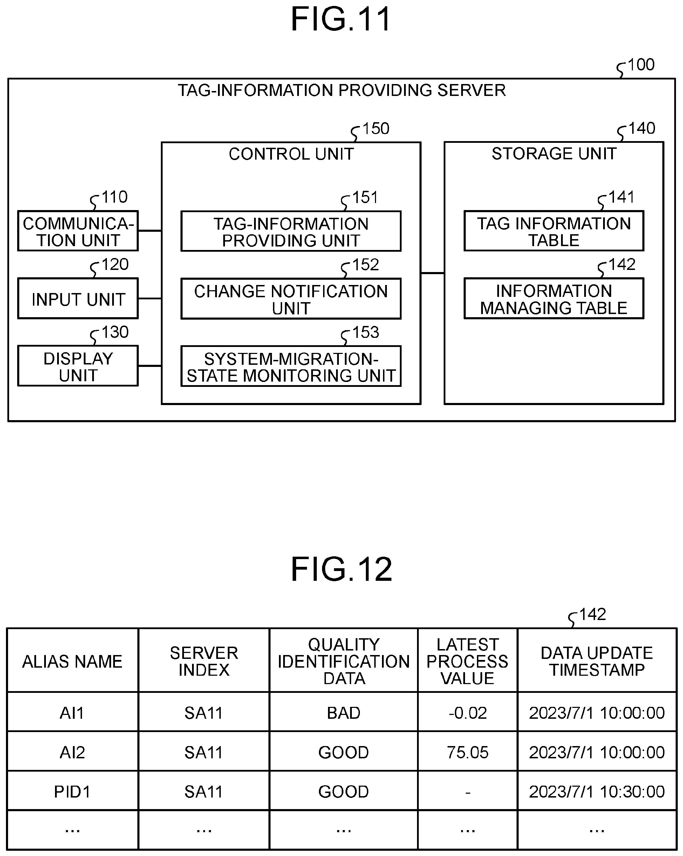

Next, a configuration example of the tag-information providing server 100 illustrated in FIG. 6 will be explained. FIG. 11 is a functional block diagram illustrating a functional configuration of the tag-information providing server according to the present embodiment. As illustrated in FIG. 11, the tag-information providing server 100 includes a communication unit 110, an input unit 120, a display unit 130, a storage unit 140, and a control unit 150. Functional units in the tag-information providing server 100 are not limited to those illustrated, and may include other functional units. The tag-information providing server 100 may be implemented by multiple server computers. The tag-information providing server 100 is one example of "managing device".

The communication unit 110 performs data communication with the communication relay device 11 of the existing system 10, and the monitoring control application 30 and the controller 40 of the new system 20.

The input unit 120 inputs various kinds of information to the control unit 150 of the tag-information providing server 100. The input unit 120 includes a keyboard, a mouse, a touch panel, and the like.

The display unit 130 displays information output from the control unit 150 of the tag-information providing server 100. For example, the display unit 130 displays the progress status screen 70 explained in FIG. 10.

The storage unit 140 stores the tag information table 141 and information managing table 142. The storage unit 140 is implemented by a memory, a hard disk, or the like.

The tag information table 141 stores the alias name, the server index, and the OPC UA Server name associated with the server index, associating with one another. Explanation about the tag information table 141 is the same as what has been explained using FIG. 7.

The information managing table 142 is a table that holds information acquired from the controller 5 of the existing system 10 and the controller 40 of the new system 20. FIG. 12 is a diagram illustrating an example of the information managing table 142. As illustrated in FIG. 12, the information managing table 142 has ALIAS NAME, SERVER INDEX, QUALITY IDENTIFICATION DATA, LATEST PROCESS VALUE, and DATA UPDATE TIMESTAMP. Explanation about ALIAS NAME and SERVER INDEX is same as what is explained in FIG. 7. Explanation about QUALITY IDENTIFICATION DATA, LATEST PROCESS VALUE, AND DATA UPDATE TIMESTAMP is same as what has been explained in FIG. 10.

The control unit 150 is a processing unit that controls the entire tag-information providing server 100, and is implemented by, for example, a processor or the like. This control unit 150 includes a tag-information providing unit 151, a change notification unit 152, and a system-migration-status monitoring unit 153. The tag-information providing unit 151 is one example of "acquiring unit". The system-migration-status monitoring unit 153 is one example of the display control unit.

The tag-information providing unit 151 performs processing explained with "tag-information providing function" described above, and provides tag information of an I/O and a functional block to the monitoring control application 30.

The tag-information providing unit 151 communicates with the communication relay device 11 of the existing system 10 and the controller 40 of the new system 20, and acquires various kinds of information regarding a tag. For example, to various kinds of information regarding a tag, the alias name, the server index (including OPC UA Server name), the quality identification data, the latest process value, and the data update timestamp are set. The tag-information providing unit 151 registers the acquired tag information in the information managing table 142. The various kinds of information regarding a tag may include information other than the above.

The tag-information providing unit 151 sets a relationship between the alias name registered in the information managing table 142 and the server index to the tag information table 141. The tag-information providing unit 151 provides information of the tag information table 141 to the monitoring control application 30.

The tag-information providing unit 151 communicates with the communication relay device 11 of the existing system 10 and the controller 40 of the new system 20, and repeatedly performs the processing described above each time the various kinds of information regarding a tag is received. Other explanation about the tag-information providing unit 151 is same as the explanation of the "tag-information providing function" described above.

The change notification unit 152 performs processing explained with the "change notification function" described above, and notifies the monitoring control application 30, when a position of an effective tag has changed, of the change.

Upon detecting that one server index (for example, SA11) has changed to another server index (SA40) for a specific alias name based on the information managing table 142, the change notification unit 152 notifies the monitoring control application 30 of information of the server index after the change, which is the server index for the specific alias. For example, the change notification unit 152 multicasts "Model Change Event" in which information of the specific alias name and the server index after the change is set to the communication network.

The change notification unit 152 repeatedly performs the processing described above each time the information managing table 142 is updated. Other explanation about the change notification unit 152 is same as the explanation of the "change notification function" described above.

The system-migration-status monitoring unit 153 performs the processing explained with the "system-migration-status monitoring function" described above, and displays the progress status screen 70 on the display unit 130.

The system-migration-status monitoring unit 153 identifies a migration status of the tag name (alias name) based on the information managing table 142, and expresses the migration status with a color of a square marker.

For example, the system-migration-status monitoring unit 153 determines, for one tag name, that migration of the tag has been completed when the quality identification data corresponding to the server index "SA11" is "BAD" and the quality identification data corresponding to the server index "SA40" is "GOOD", and displays the background color of the square marker indicating the migration status of the tag in the first color (for example, green).

The system-migration-status monitoring unit 153 determines, for one tag name, that migration of the tag has not been started when the quality identification data corresponding to the server index "SA11" is "GOOD" and the quality identification data corresponding to the server index "SA40" is "BAD", and displays the background color of the square marker indicating the migration status of the tag in the second color (for example, yellow).

The system-migration-status monitoring unit 153 determines, for one tag name, that migration of the tag is in progress when the quality identification data corresponding to the server index "SA11" is "BAD" and the quality identification data corresponding to the server index "SA40" is "BAD", and displays the background color of the square marker indicating the migration status of the tag in the third color (for example, orange).

The system-migration-status monitoring unit 153 blinks the background color of the square marker indicating the migration status of the tag in the fourth color (for example, red) and the fifth color (for example, black) every 500 milliseconds for one tag name when a period of time in which the quality identification data corresponding to the server index "SA11" is "BAD" and the quality identification data corresponding to the server index "SA40" tag is "BAD" lasts for predetermined time (for example, the default value is set to 60 seconds) or longer.

Other explanation about the system-migration-status monitoring unit 153 is same as the explanation about the "system-migration monitoring function" described above.

### Functional Configuration of Device having Monitoring Control Application

Next, a functional configuration of a device having the function of the monitoring control application 30 will be explained. It will be explained supposing the device having the function of the monitoring control application 30 is "control device 200". The control device 200 may be implemented by multiple computers, or may be implemented as a virtual machine.

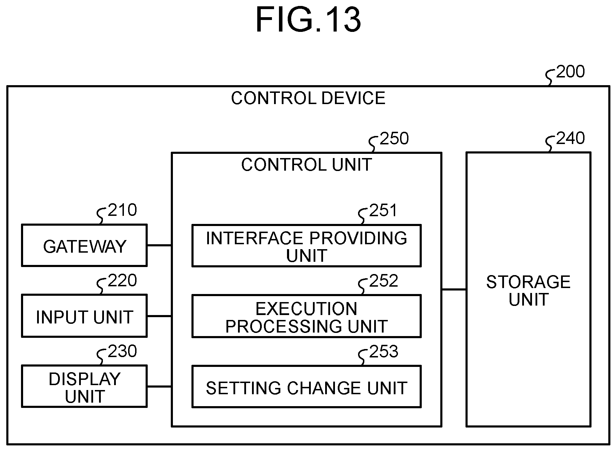

FIG. 13 is a functional block diagram illustrating a functional configuration of the control device according to the present embodiment. As illustrated in FIG. 13, the control device 200 includes a Gateway 210, an input unit 220, a display unit 230, a storage unit 240, and a control unit 250.

The Gateway 210 is an OPC UA Server, an OPC UA Client, or the like, and corresponds to the Gateway 31 described above.

The input unit 220 inputs various kinds of information to the control unit 250 of the control device 200. The input unit 220 includes a keyboard, a mouse, a touch panel, and the like.

The display unit 230 displays information output from the control unit 250 of the control device 200. For example, the display unit 230 displays an operating screen by HMI or information of Alarms and Trends.

The storage unit 240 stores various kinds of data used by the control unit 250. The storage unit 240 is implemented by a memory, a hard disk, or the like.

An interface providing unit 251 displays the operating screen by HMI on the display unit 230. Moreover, the interface providing unit 251 displays information of Alarms and Trends on the display unit 230.

The interface providing unit 251 is connected to the communication relay device 11 or the controller 40 through the Gateway 210, and enables an access to an effective tag. For example, to the Gateway 210, the relationship between a tag name and a server index corresponding to the tag name is set as explained in FIG. 9, and the Gateway 210 switches connection destinations of the interface providing unit 251 based on the information.

For example, suppose that "SA11" is set as the server index corresponding to the tag name (alias name) "PID1" the Gateway 210 to the Gateway 210. In this case, when accessing to an effective tag corresponding to the tag name (alias name) "PID1", the connection destination is set to the communication relay device 11 by the Gateway 210, and the interface providing unit 251 accesses the tag (the tag of PID1) of the controller 5 through the communication relay device 11.

On the other hand, suppose that "SA40" is set as the server index corresponding to the tag name (alias name) "PID1" to the Gateway 210. In this case, when accessing to an effective tag corresponding to the tag name (alias name) "PID1", the connection destination is set to the controller 40 by the Gateway 210, and the interface providing unit 251 accesses the tag (the tag of PID1) of the controller 40.

An execution processing unit 252 has a function corresponding to various kinds of the application software 32 explained in FIG. 2 and the like.

A setting change unit 253 performs processing explained with the "setting change function" described above, and perceives that the server index corresponding to the tag has changed, and changes the OPC UA Server name corresponding to the tag name set to the Gateway 210.

The setting change unit 253 receives the Model Change Event transmitted from the tag-information providing server 100, and sets the server index after the change when the server index corresponding to the tag name (alias name) is changed.

For example, upon acquiring "Model Change Event" indicating that the effective server index has changed from "SA11" to "SA40" for the alias name "PID1" from the tag-information providing server 100, the setting change unit 253 updates the OPC UA Server name set to the "OPC Server name (same as the OPC UA Server name)" from the name associated with the server index "SA11" to the name associated with "SA40". Moreover, the setting change unit 253 updates the OPC UA Server name set to "OPC Server name" included in the substructure under all the item names of the substructure 60 under the tag name "PID1" from the name associated with the server index "SA11" to the name associated with "SA40".

Other explanation about the setting change unit 253 is same as the explanation of the "setting change function" described above.

### Flow of Processing

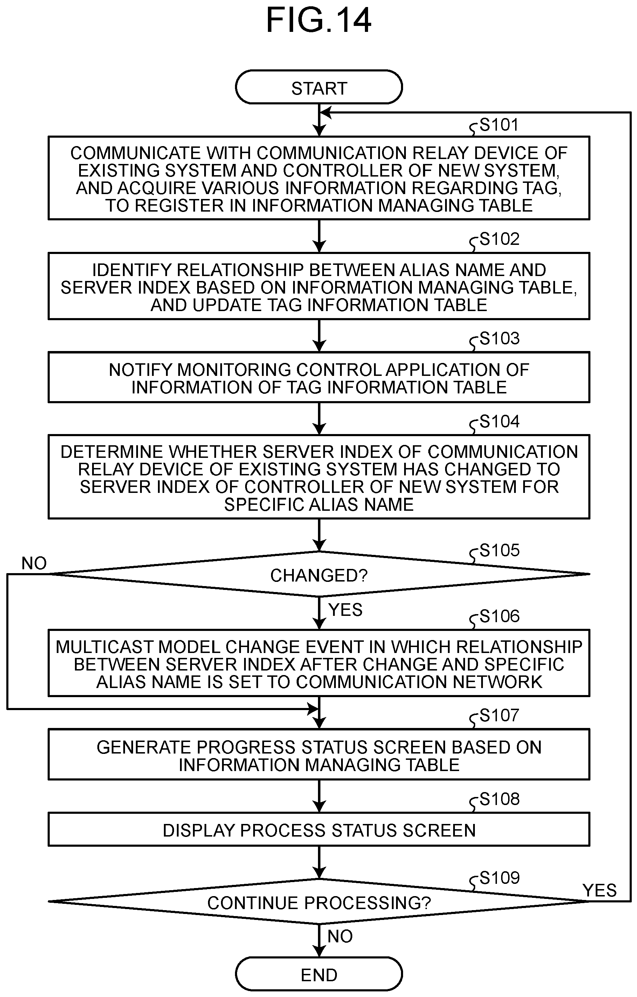

Next, a flow of processing of the tag-information providing server 100 of the present embodiment will be explained. FIG. 14 is a flowchart illustrating a flow of processing of the tag-information providing server 100 of the present embodiment. As illustrated in FIG. 14, the tag-information providing unit 151 of the tag-information providing server 100 communicates with the communication relay device 11 of the existing system 10 and the controller 40 of the new system 20, and acquires various kinds of information regarding a tag, to register the acquired various kinds of information in the information managing table 142 (step S101).

The tag-information providing server 100 identifies a relationship between the alias name and the server index based on the information managing table 142, and updates the tag information table 141 (step S102). The tag-information providing server 100 notifies the monitoring control application 30 (the control device 200) of the information of the tag information table 141 (step S103).

The change notification unit 152 of the tag-information providing server 100 determines whether the server index of the communication relay device 11 has changed to the server index of the controller 40 for a specific alias name based on the information managing table 142 (step S104).

When it has changed (step S105: YES), the change notification unit 152 multicasts Model Change Event in which a relationship between the server index after the change and the specific alias name is set to the communication network (step S106). On the other hand, when it has not changed (step S105: NO), the change notification unit 152 shifts to step S107.

The system-migration-status monitoring unit 153 of the tag-information providing server 100 generates the progress status screen 70 based on the information managing table 142 (step S107). The system-migration-status monitoring unit 153 displays the progress status screen 70 on the display unit 130 (step S108).

When the processing is continued (step S109: YES), the tag-information providing server 100 shifts to step S101. On the other hand, when the processing is not continued (step S109: NO), the tag-information providing server 100 ends the processing.

### Effect

Next, effects of the information providing system according to the present embodiment will be explained. The tag-information providing server 100 of the information providing system receives the first tag information regarding the first tag set to the component of the controller 5 in the existing system 10, and receives the second tag information regarding the second tag set to the component of the controller 40 in the new system 20. The tag-information providing server 100 detects whether the effective tag has changed from the first tag to the second tag based on the first tag information and the second tag information, and notifies the monitoring control application 30 (the control device 200) of the detection result. The control device 200 of the information providing system changes the access destination to the effective tag based on the detection result of the tag-information providing server 100 to the controller 40. Thus, it is possible to support effective migration from the existing system 10 to the new system 20.

Moreover, according to the information providing system, reassignment of tag names is performed automatically and in a short period of time and, therefore, the delay time for resuming control is only time for reconnecting wirings in the field, and a risk of plant shutdown can be reduced.

Moreover, according to the information providing system, the loop migration time can be shortened, reducing the stress on operation monitoring operators of the plant.

Furthermore, according to the information providing system, the migration of tag names on the operating screen by HMI is automatically performed and, therefore, time necessary for migration from the existing system 10 to the new system 20 can be shortened.

Moreover, according to the information providing system, during a migration period from the existing system 10 to the new system 20, a consistent operation monitoring environment of a plant can be provided, and even when an unexpected event occurs, it is possible to respond as usual, except for a tag during cutover.

Furthermore, in the existing system 10, the communication relay device 11 is arranged, and the tag-information providing server 100 acquires various kinds of information (the server index, the tag name (alias name), and the quality identification data) regarding the first tag from the communication relay device 11, and acquires various kinds of information (the server index, the tag name, (alias name), and the quality identification data) regarding the second tag from the controller 40. Thus, the tag-information providing server 100 can easily grasp a status of the tag of the controller 5 in the existing system 10 and a status of the tag of the controller 40 in the new system 20.

The tag-information providing server 100 detects whether a tag corresponding to the same identification information has changed from the first tag to the second tag based on the communication quality of the first tag and the communication quality of the second tag. For example, when the communication quality included in the second tag information is "GOOD" whereas the communication quality included in the first tag information is "BAD", the tag-information providing server 100 detects that that the tag corresponding to the same identification information has been changed from the first tag to the second tag. Thus, it becomes possible to identify a change of the effective tag appropriately.

When detecting whether it has changed from the first tag to the second tag, the control device 200 changes the access destination to the tag corresponding to the same identification information from the communication relay device 11 to the controller 40. Thus, the operator of the new system 20 can easily access to the tag of the migration destination through the operating screen.

The tag-information providing server 100 displays the migration status (for example, the progress status screen 70) from the first tag to the second tag. Thus, an administrator involved in the system migration project by the hot cutover method or the like can easily grasp the migration status of tags.

### Hardware

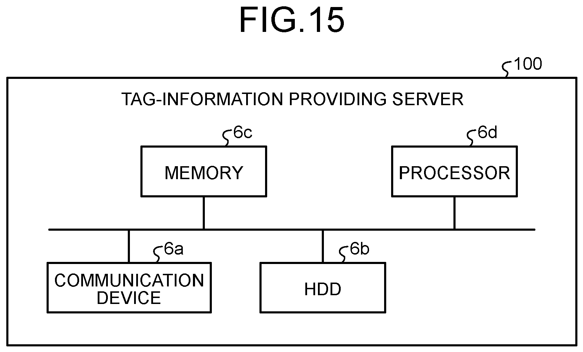

Next, a hardware configuration example of the tag-information providing server 100 will be explained. FIG. 15 is a diagram explaining a hardware configuration example. As illustrated in FIG. 15, the tag-information providing server 100 includes a communication device 6a, a hard disk drive (HDD) 6b, a memory 6c, and a processor 6d. Moreover, the respective components illustrated in FIG. 15 are connected to one another through a bus or the like.

The communication device 6a communicates with the communication relay device 11 of the existing system 10, the monitoring control application 30 and the controller 40 of the new system 20, and the like. The HDD 6b stores a program to operate the functions illustrated in FIG. 11 and a DB.

The processor 6d reads a program to execute processing similar to the respective processing units illustrated in FIG. 11 from the HDD 6b and loads it into the memory 6c, and thereby operates a process to execute the respective functions explained in FIG. 11 and the like. For example, this process executes functions similar to those of the respective processing units included in the tag-information providing server 100. Specifically, the processor 6d performs a process to execute processing similar to the tag-information providing unit 151, the change notification unit 152, the system-migration-status monitoring unit 153, and the like.

As described above, the tag-information providing server 100 operates as the information providing server that performs the information providing method by reading and executing a program. Moreover, the tag-information providing server 100 can also implement functions similar to those of the embodiment described above by reading the program described above from a recording medium by a medium reader device, and executing the above read program. A program in other embodiments is not limited to be executed by the tag-information providing server 100. For example, also to a case in which the program is executed by another computer or server, or a case in which the program is executed by these in cooperation, the present invention can be applied similarly.

This program can be distributed through a network, such as the Internet. Moreover, this program can be recorded on a computer-readable recording medium, such as a hard disk, a flexible disk (FD), a CD-ROM, a magneto-optical disk (MO), and a digital versatile disc (DVD), and can be executed by being read by a computer from the recording medium.

## Claims

1. An information providing system comprising:
a control device (200) configured to provide an operating screen to access to a tag set to a component of a controller that controls a device of a plant; and
a managing device (100) configured to manage information of the tag, wherein
**characterized in that**
the managing device (100) includes
an acquiring unit (151) configured to receive first tag information regarding a first tag set to a first component of a first controller from a first system (10), and configured to receive second tag information regarding a second tag set to a second component of a second controller from a second system (20), wherein the first tag information includes first communication quality regarding the first tag and the second tag information includes second communication quality regarding the second tag; and
a change notification unit (152) configured to detect whether an effective tag has changed from the first tag to the second tag based on the first communication quality and the second communication quality, and configured to notify the control device (200) of a detection result, and
the control device (200) includes a setting change unit (253) configured to change an access destination to the effective tag to the second controller based on the detection result.

2. The information providing system according to claim 1, wherein
the first system (10) further includes a communication relay device configured to relay communication between the control device (200) and the first controller.

3. The information providing system according to claim 2, wherein
the acquiring unit (151) is configured to acquire identification information of the communication relay device, identification information of the first tag, and a communication quality regarding the first tag from the communication relay device as the first tag information.

4. The information providing system according to claim 3, wherein
the acquiring unit (151) is configured to acquire identification information of the second controller, identification information of the second tag, and a communication quality regarding the second tag from the second controller as the second tag information.

5. The information providing system according to claim 4, wherein
the change notification unit (152) is configured to detect that the tag corresponding to the identical identification information has changed from the first tag to the second tag when the communication quality included in the second tag information is better communication quality than the communication quality included in the first tag information.

6. The information providing system according to claim 1 or 5, wherein
the setting change unit (253) is configured to change an access destination to a tag corresponding to the identical identification information from the communication relay device to the second controller based on the detection result.

7. The information providing system according to any one of claims 1 to 5, wherein the managing device (100) further includes a display control unit (153) that is configured to display a migration status from the first tag to the second tag.

8. An information providing method for an information providing system that comprises a control device (200) providing an operating screen to access to a tag set to a component of a controller that controls a device of a plant, and a managing device (100) that manages information of the tag, the method comprising:
receiving first tag information regarding a first tag set to a first component of a first controller from a first system (10) by the managing device (100);
acquiring second tag information regarding a second tag set to a second component of a second controller from a second system (20) by a managing device (100);
wherein the first tag information includes first communication quality regarding the first tag and the second tag information includes second communication quality regarding the second tag;
detecting whether an effective tag has changed from the first tag to the second tag based on the first communication quality and the second communication quality, and notifying the control device (200) of a detection result by the managing device (100); and
changing an access destination to the effective tag to the second controller based on the detection result by the control device (200).

9. An information providing program that causes a computer to execute the method of claim 8.

## Patentansprüche

1. Informationsbereitstellungssystem, das aufweist:
eine Steuerungsvorrichtung (200), die konfiguriert ist, um einen Bedienbildschirm bereitzustellen, um auf eine Kennung zuzugreifen, die für eine Komponente einer Steuerungseinrichtung, die eine Vorrichtung einer Anlage steuert, festgelegt ist; und
eine Verwaltungsvorrichtung (100), die konfiguriert ist, um Informationen der Kennung zu verwalten, wobei
**dadurch gekennzeichnet, dass**
die Verwaltungsvorrichtung (100) enthält:
eine Erlangungseinheit (151), die konfiguriert ist, um erste Kennungsinformationen bezüglich einer ersten Kennung, die für eine erste Komponente einer ersten Steuerungseinrichtung festgelegt ist, von einem ersten System (10) zu empfangen, und die konfiguriert ist, um zweite Kennungsinformationen bezüglich einer zweiten Kennung, die für eine zweite Komponente einer zweiten Steuerungseinrichtung festgelegt ist, von einem zweiten System (20) zu empfangen, wobei die ersten Kennungsinformationen eine erste Kommunikationsqualität bezüglich der ersten Kennung enthalten und die zweiten Kennungsinformationen eine zweite Kommunikationsqualität bezüglich der zweiten Kennung enthalten; und
eine Änderungsbenachrichtigungseinheit (152), die konfiguriert ist, um basierend auf der ersten Kommunikationsqualität und der zweiten Kommunikationsqualität zu detektieren, ob sich eine wirksame Kennung von der ersten Kennung zu der zweiten Kennung geändert hat, und die konfiguriert ist, um die Steuerungsvorrichtung (200) über ein Detektionsergebnis zu benachrichtigen, und
die Steuerungsvorrichtung (200) eine Einstellungsänderungseinheit (253) enthält, die konfiguriert ist, um basierend auf dem Detektionsergebnis ein Zugriffsziel auf die wirksame Kennung zu der zweiten Steuerungseinrichtung zu ändern.

2. Informationsbereitstellungssystem nach Anspruch 1, wobei
das erste System (10) des Weiteren eine Kommunikationsweiterleitungsvorrichtung enthält, die konfiguriert ist, um eine Kommunikation zwischen der Steuerungsvorrichtung (200) und der ersten Steuerungseinrichtung weiterzuleiten.

3. Informationsbereitstellungssystem nach Anspruch 2, wobei
die Erlangungseinheit (151) konfiguriert ist, um Identifikationsinformationen der Kommunikationsweiterleitungsvorrichtung, Identifikationsinformationen der ersten Kennung und eine Kommunikationsqualität bezüglich der ersten Kennung von der Kommunikationsweiterleitungsvorrichtung als die ersten Kennungsinformationen zu erlangen.

4. Informationsbereitstellungssystem nach Anspruch 3, wobei
die Erlangungseinheit (151) konfiguriert ist, um Identifikationsinformationen der zweiten Steuerungseinrichtung, Identifikationsinformationen der zweiten Kennung und eine Kommunikationsqualität bezüglich der zweiten Kennung von der zweiten Steuerungseinrichtung als die zweiten Kennungsinformationen zu erlangen.

5. Informationsbereitstellungssystem nach Anspruch 4, wobei
die Änderungsbenachrichtigungseinheit (152) konfiguriert ist, um zu detektieren, dass sich die Kennung, die den identischen Identifikationsinformationen entspricht, von der ersten Kennung zu der zweiten Kennung geändert hat, wenn die Kommunikationsqualität, die in den zweiten Kennungsinformationen enthalten ist, eine bessere Kommunikationsqualität als die Kommunikationsqualität ist, die in den ersten Kennungsinformationen enthalten ist.

6. Informationsbereitstellungssystem nach Anspruch 1 oder 5, wobei
die Einstellungsänderungseinheit (253) konfiguriert ist, um basierend auf dem Detektionsergebnis ein Zugriffsziel auf eine Kennung, die den identischen Identifikationsinformationen von der Kommunikationsweiterleitungsvorrichtung entspricht, zu der zweiten Steuerungseinrichtung zu ändern.

7. Informationsbereitstellungssystem nach einem der Ansprüche 1 bis 5, wobei die Verwaltungsvorrichtung (100) des Weiteren eine Anzeigesteuerungseinheit (153) enthält, die konfiguriert ist, um einen Migrationsstatus von der ersten Kennung zu der zweiten Kennung anzuzeigen.

8. Informationsbereitstellungsverfahren für ein Informationsbereitstellungssystem, das eine Steuerungsvorrichtung (200), die einen Bedienbildschirm bereitstellt, um auf eine Kennung zuzugreifen, die für eine Komponente einer Steuerungseinrichtung, die eine Vorrichtung einer Anlage steuert, festgelegt ist, und eine Verwaltungsvorrichtung (100), die Informationen der Kennung verwaltet, aufweist, wobei das Verfahren aufweist:
ein Empfangen erster Kennungsinformationen bezüglich einer ersten Kennung, die für eine erste Komponente einer ersten Steuerungseinrichtung festgelegt ist, von einem ersten System (10) durch die Verwaltungsvorrichtung (100);
ein Erlangen zweiter Kennungsinformationen bezüglich einer zweiten Kennung, die für eine zweite Komponente einer zweiten Steuerungseinrichtung festgelegt ist, von einem zweiten System (20) durch eine Verwaltungsvorrichtung (100);
wobei die ersten Kennungsinformationen eine erste Kommunikationsqualität bezüglich der ersten Kennung enthalten und die zweiten Kennungsinformationen eine zweite Kommunikationsqualität bezüglich der zweiten Kennung enthalten;
ein Detektieren, ob sich eine wirksame Kennung von der ersten Kennung zu der zweiten Kennung geändert hat, basierend auf der ersten Kommunikationsqualität und der zweiten Kommunikationsqualität, und ein Benachrichtigen der Steuerungsvorrichtung (200) über ein Detektionsergebnis durch die Verwaltungsvorrichtung (100); und
ein Ändern eines Zugriffsziels auf die wirksame Kennung zu der zweiten Steuerungseinrichtung basierend auf dem Detektionsergebnis durch die Steuerungsvorrichtung (200).

9. Informationsbereitstellungsprogramm, das veranlasst, dass ein Computer das Verfahren nach Anspruch 8 ausführt.

## Revendications

1. Système de fourniture d'informations comprenant :
un dispositif de commande (200) configuré pour fournir un écran de fonctionnement permettant d'accéder à une balise réglée sur un composant d'un contrôleur qui commande un dispositif d'une installation ; et
un dispositif de gestion (100) configuré pour gérer des informations de la balise, dans lequel
**caractérisé en ce que**
le dispositif de gestion (100) inclut
une unité d'acquisition (151) configurée pour recevoir des informations de première balise concernant un première balise réglée sur un premier composant d'un premier contrôleur provenant d'un premier système (10) et configurée pour recevoir des informations de seconde balise concernant une seconde balise réglée sur un second composant d'un second contrôleur provenant d'un second système (20), dans lequel les informations de première balise incluent une première qualité de communication concernant la première balise, et les informations de seconde balise incluent la seconde qualité de communication concernant la seconde balise ; et
une unité de notification de changement (152) configurée pour détecter si une balise effective est passée de la première à la seconde balise sur la base de la première qualité de communication et de la seconde qualité de communication et configurée pour notifier le dispositif de commande (200) d'un résultat de détection, et
le dispositif de commande (200) inclut une unité de changement de réglage (253) configurée pour changer une destination d'accès à la balise effective vers le second contrôleur sur la base du résultat de détection.

2. Système de fourniture d'informations selon la revendication 1, dans lequel
le premier système (10) inclut en outre un dispositif de relais de communication configuré pour relayer une communication entre le dispositif de commande (200) et le premier contrôleur.

3. Système de fourniture d'informations selon la revendication 2, dans lequel
l'unité d'acquisition (151) est configurée pour acquérir des informations d'identification du dispositif de relais de communication, des informations d'identification de la première balise et une qualité de communication concernant la première balise provenant du dispositif de relais de communication en tant que premières informations de balise.

4. Système de fourniture d'informations selon la revendication 3, dans lequel
l'unité d'acquisition (151) est configurée pour acquérir des informations d'identification du second contrôleur, des informations d'identification de la seconde balise et une qualité de communication concernant la seconde balise provenant du second contrôleur en tant que secondes informations de balise.

5. Système de fourniture d'informations selon la revendication 4, dans lequel
l'unité de notification de changement (152) est configurée pour détecter que la balise correspondant aux informations d'identification identiques est passée de la première balise à la seconde balise lorsque la qualité de communication incluse dans les informations de seconde balise est une meilleure qualité de communication que la qualité de communication incluse dans les informations de première balise.

6. Système de fourniture d'informations selon la revendication1 ou 5, dans lequel
l'unité de changement de réglage (253) est configurée pour changer une destination d'accès à une balise correspondant aux informations d'identification identiques du dispositif de relais de communication au second contrôleur sur la base du résultat de détection.

7. Système de fourniture d'informations selon l'une quelconque des revendications 1 à 5, dans lequel
le dispositif de gestion (100) inclut en outre une unité de commande d'affichage (153) qui est configurée pour afficher un état de migration de la première balise à la seconde balise.

8. Procédé de fourniture d'informations pour un système de fourniture d'informations qui comprend un dispositif de commande (200) fournissant un écran de fonctionnement permettant d'accéder à une balise réglée sur un composant d'un contrôleur qui commande un dispositif d'une installation et un dispositif de gestion (100) qui gère des informations de la balise, le procédé comprenant :
la réception de premières informations de balise concernant une première balise réglée sur un premier composant d'un premier contrôleur provenant d'un premier système (10) par le dispositif de gestion (100) ;
l'acquisition de secondes informations de balise concernant une seconde balise réglée sur un second composant d'un second contrôleur à partir d'un deuxième système (20) par un dispositif de gestion (100) ;
dans lequel les premières informations de balise incluent une première qualité de communication concernant la première balise, et les secondes informations de balise incluent une seconde qualité de communication concernant la seconde balise ;
le fait de détecter si une balise effective est passée de la première balise à la seconde balise sur la base de la première qualité de communication et de la seconde qualité de communication et la notification au dispositif de commande (200) d'un résultat de détection par le dispositif de gestion (100) ; et
le changement d'une destination d'accès à la balise effective vers le second contrôleur sur la base du résultat de détection par le dispositif de commande (200).

9. Programme de fourniture d'informations qui amène un ordinateur à exécuter le procédé selon la revendication 8.
